Europäisches Patentamt

European Patent Office

Office européen des brevets

(11) Veröffentlichungsnummer: **0 369 189**
**A1**

## EUROPÄISCHE PATENTANMELDUNG

(21) Anmeldenummer: 89119500.0

(22) Anmeldetag: 20.10.89

(51) Int. Cl.5: **F02B 37/04, F02B 37/14**

(30) Priorität: 02.11.88 DE 3837176

(43) Veröffentlichungstag der Anmeldung:
23.05.90 Patentblatt 90/21

(84) Benannte Vertragsstaaten:
DE ES FR GB IT

(71) Anmelder: **VOLKSWAGEN AKTIENGESELLSCHAFT**

**D-3180 Wolfsburg(DE)**

(72) Erfinder: **Manz, Peter Wolfgang, Dipl.-Ing.
Am Bostelberg 18a
D-3170 Gifhorn(DE)**

(54) Antriebssystem für Fahrzeuge, insbesondere Personenkraftfahrzeuge.

(57) Es wird ein Antriebssystem für Fahrzeuge, insbesondere Personenkraftfahrzeuge, beschrieben, bei dem eine ein Kraftstoff-Luft-Gemisch verbrennende Brennkraftmaschine (1) sowie ein Abgasturbolader (3) und ein zusätzlicher, mechanisch, insbesondere von der Brennkraftmaschine (1) angetriebener Lader (6) vorgesehen sind. Der Turbolader (3) und der mechanisch angetriebene Lader (6) sind parallel zueinander in zu der Brennkraftmaschine (1) führenden Ansaugzweigleitungen (10, 11) angeordnet, die vor der Einmündung in die Brennkraftmaschine zu einer gemeinsamen Ansaugleitung (12) verbunden sind. Um einen einfachen und weitgehend selbsttätigen Übergang der Ladedruckversorgung von dem einen auf den anderen Lader zu erreichen, soll in den Ansaugzweigleitungen (10, 11) in Strömungsrichtung vor der Einmündung in die gemeinsame Ansaugleitung (12) jeweils ein in Abhängigkeit von der Druckdifferenz zwischen der jeweiligen Ansaugzweigleitung und der gemeinsamen Ansaugleitung steuerbares Ventil (15, 19) vorgesehen sein. Weiter ist es zweckmäßig, wenn zumindest in der den Turbolader (3) beaufschlagenden ersten Ansaugzweigleitung (10) in Strömungsrichtung hinter dem Turbolader (3) und vor dem Ventil (15) eine mit dem Eingang des Turboladers (3) verbundene Rückführungsleitung (17) angeschlossen ist.

Fig.1

## Antriebssystem für Fahrzeuge, insbesondere Personenkraftfahrzeuge

Die Erfindung bezieht sich auf ein Antriebssystem für Fahrzeuge, insbesondere Personenkraftfahrzeuge, mit einer ein Kraftstoff-Luft-Gemisch verbrennenden Brennkraftmaschine sowie mit einem Abgas-Turbolader und einem zusätzlichen, mechanisch angetriebenen Lader gemäß dem Oberbegriff des Patentanspruchs 1.

Antriebssysteme dieser Bauart, bei denen der Turbolader und der mechanische Lader parallel zueinander angeordnet sind, gehen aus dem Stand der Technik bereits als bekannt hervor (z.B. DE-AS 1 133 945). Bei dieser bekannten Anordnung münden die den beiden Ladern zugeordneten Ansaug-Zweigleitungen über eine Rückschlageinrichtung in die gemeinsame Ansaugleitung, wobei die Rückschlageinrichtung so ausgebildet ist, daß sie, solange der Turbolader noch nicht genügend Druck erzeugt, die diesem zugeordnete Ansaugzweigleitung versperrt, so daß nur die von dem mechanischen Lader kommende Ansaugzweigleitung mit der gemeinsamen Ansaugleitung verbunden ist. Wenn dagegen der Turbolader genügend Druck erzeugt, öffnet die Rückschlageinrichtung, so daß dann beide Ansaugzweigleitungen mit der gemeinsamen Ansaugleitung verbunden sind. Dabei wird dort davon ausgegangen, daß der mechanische Lader von einem volumetrischen Gebläse gebildet wird, das mit zunehmender Ladeluftförderung durch den Abgasturbolader bis zum Stillstand verlangsamt und bei besonders günstigen Umständen sogar als Kraftmaschine zur Einspeisung zusätzlicher Energie in die Abtriebswelle der Brennkraftmaschine verwendet werden kann. Solange der Abgasturbolader aber noch nicht genügend Druckenergie erzeugt, versperrt also die Rückschlageinrichtung die von dem Abgasturbolader kommende Ansaugzweigleitung oder verbindet diese auch mit dem Eingang des mechanischen Laders.

Die der Erfindung zugrundeliegende Aufgabe besteht nun darin, bei einem Antriebssystem der im Oberbegriff genannten Art die Zusammenwirkung der einzelnen Elemente und deren Ansprechverhalten zu verbessern sowie den Leistungsbedarf für den Antrieb der Lader zu reduzieren.

Die Lösung dieser Aufgabe ergibt sich durch die Merkmale des Patentanspruchs 1. Durch die in den Ansaugzweigleitungen angeordneten Ventile wird eine selbsttätige Ladedruckübernahme von einem auf den anderen der beiden Lader erreicht. So wird bei niedrigen Drehzahlen und Lasten zunächst der mechanische Lader den höheren Druck erzeugen, so daß das in dessen Ansaugzweigleitung angeordnete Ventil geöffnet und das in der Ansaugzweigleitung des Turboladers eingeschaltete Ventil geschlossen ist. Erreicht bzw. überschreitet dagegen der von dem Turbolader erzeugte Ladedruck den in der gemeinsamen Ansaugleitung herrschenden Druck, so übernimmt der Turbolader die Erzeugung und Lieferung der Ladeluft, indem das in der Turbolader-Ansaugzweigleitung eingeschaltete Ventil geöffnet und das in der Ansaugzweigleitung des mechanischen Laders angeordnete Ventil geschlossen wird.

Dadurch, daß gemäß einer Weiterbildung der Erfindung zumindest im Turbolader-Luftkreis eine mit dem Eingang des Turboladers verbundene Rückführungsleitung vorgesehen ist, ergibt sich die Möglichkeit, in den Betriebsphasen, in denen der Abgasturbolader noch nicht zur Ladeluftlieferung herangezogen wird, diesen im wesentlichen "drucklos" mitlaufen zu lassen, wodurch nahezu die gesamte Wellenleistung der zugeordneten Abgasturbine zur Beschleunigung des Turboladers verwendet werden kann, dieser also schneller auf Drehzahl und damit zur Übernahme der Ladeluftlieferung kommen kann.

In ähnlicher Weise kann auch in dem den mechanischen Lader enthaltenden Ladeluftkreis eine Rückführungsleitung vorgesehen sein. Auch hier wird dann ein nahezu druckloses Mitlaufen des mechanischen Laders in den Betriebszuständen sichergestellt, in denen der Turbolader die Ladeluftlieferung besorgt. Auf diese Weise kann zumindest die erforderliche Antriebsleistung des mechanischen Laders reduziert werden, wenn er nicht, wie dies nach einem anderen Vorschlag der Erfindung erfolgen kann, überhaupt durch eine Kupplung abgeschaltet wird.

Schließlich kann auch noch eine Überschuß-Rückführungsleitung vorgesehen sein, über die beim Überschreiten des maximal zulässigen Ladedrucks die von dem Abgasturbolader erzeugte überschüssige Ladeluft auf die Saugseite des mechanischen Laders geleitet wird. Dadurch kann eine weitere Reduzierung der Antriebsleistung des mechanischen Laders und gegebenenfalls sogar ein Rückgewinn an mechanischer Arbeit durch Betrieb des mechanischen Laders als Kraftmaschine bewirkt werden.

Weitere zweckmäßige Ausgestaltungen der Erfindung ergeben sich gemäß den übrigen Merkmalen der Unteransprüche.

In der Zeichnung ist das erfindungsgemäße Antriebssystem anhand zweier Ausführungsbeispiele gezeigt, wobei die Zeichnung jeweils schematische Schaltbilder dieser beiden Ausführungsvarianten zeigen. In den beiden Figuren der Zeichnung sind dabei gleiche oder vergleichbare Bauteile mit den gleichen bzw. mit einem Strich markierten Bezugszeichen versehen worden. So stellt 1 eine bevorzugt in einem Personenkraftfahrzeug verwendete Brennkraftmaschine dar, die beispielsweise als Ottomotor ausgebildet ist. 2 bezeichnet ein Abgasturboladeraggregat, das aus einem Turbolader 3 und einer über eine Welle mit diesem ververbundenen Abgasturbine 4 besteht, die über eine Abgasleitung 26 von den aus der Brennkraftmaschine 1 austretenden Abgasen beaufschlagt wird.

Parallel zu dem Abgasturbolader 3 ist ein mechanisch angetriebener Lader 6 vorgesehen, der über ein hier aus Riemenscheiben 7a und 7b sowie einem endlosen Übertragungsriemen 8 bestehenden Getriebe von der Brennkraftmaschine 1 angetrieben wird. Der Turbolader 3 und der mechanische Lader 6 sind dabei in parallel zueinander angeordneten Ansaugzweigleitungen 10 und 11 angeordnet, die über ein hier gemeinsames Luftfilter 9 Luft aus der Umgebung ansaugen und in eine gemeinsame, über eine Drosselklappe 13 zu den Ansaugkanälen der Brennkraftmaschine 1 führenden Ansaugleitung 12 transportieren.

Vor der Einmündung in die gemeinsame Ansaugleitung 12 sind in den beiden Ansaugzweigleitungen 10 und 11 z.B. als Rückschlagventile ausgebildete Ventile 15 und 19 angeordnet, die jeweils die Ladeluftversorgung der Brennkraftmaschine 1 durch den Turbolader 3 oder den mechanischen Lader 6 steuern. So ist das Rückschlagventil 15 in der den Turbolader 3 aufweisenden Zweigleitung 10 geschlossen, solange der Ladedruck des mechanischen Laders 6 höher als der des Turboladers 3 ist, während umgekehrt das Rückschlagventil 19 geschlossen und das Rückschlagventil 15 geöffnet wird, wenn die Ladedruckversorgung der Brennkraftmaschine 1 von dem Turbolader übernommen wird.

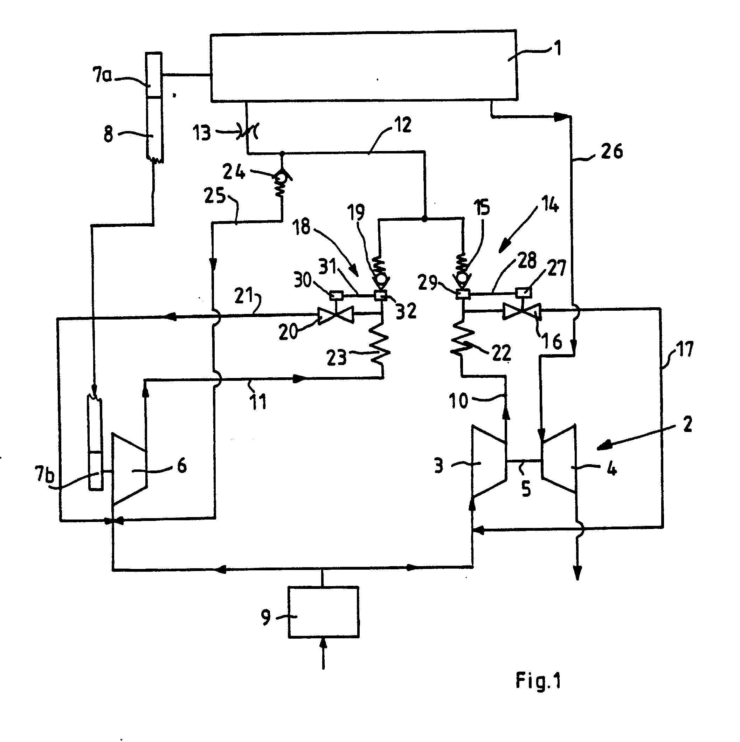

In Strömungsrichtung vor diesen Rückschlagventilen 15 bzw. 19 zweigen bei der Ausführung nach der Figur 1 von beiden Ansaugzweigleitungen 10 und 11 Rückführungsleitungen 17 und 21 ab, die mit den Eingängen der jeweiligen Lader 3 bzw. 6 verbunden sind. Diese Rückführungsleitungen 17 und 21 ermöglichen die Rückführung der von den jeweiligen Ladern erzeugten Luft an ihren jeweiligen Eingang, solange diese Lader nicht zur Ladedruckversorgung der Brennkraftmaschine 1 herangezogen werden. Dazu sind in den Rückführungsleitungen 17 und 21 Ventile 16 und 20 angeordnet, die von Stellmotoren 27 bzw. 30 betätigt werden. Diese Stellmotore 27 bzw. 30 sind über Signalleitungen 28 bzw. 31 mit Signalgebern 29 bzw. 32 verbunden, die beispielsweise den Schließzustand der Ventile 15 bzw. 19 erfassen und bei Schließung der jeweiligen Ventile ein Öffnen der in den Rückführungsleitungen 17, 21 angeordneten Steuerventile 16, 20 bewirken.

Vor der Abzweigung der Rückführungsleitungen 17 bzw. 21 sind in den beiden Ansaugzweigleitungen 10 und 11 noch Ladeluftkühler 22 und 23 vorgesehen, die für eine Rückkühlung der während der Ladedruckerzeugung in den jeweiligen Ladern 3 und 6 erwärmten Ladeluft sorgen.

Schließlich ist bei der Ausführung nach der Figur 1 noch eine Überschußrückführungsleitung 25 vorgesehen, die von einem Überdruckventil 24 gesteuert eine Verbindung zwischen der gemeinsamen Ansaugleitung 12 und der Saugseite des mechanischen Laders 6 herstellt. Diese Überschußrückführungsleitung 25 fördert die bei Überschreiten eines vorgegebenen maximalen Ladedrucks von dem Turbolader 3 erzeugte überschüssige Ladeluft auf die Eingangsseite des mechanischen Laders 6 zurück.

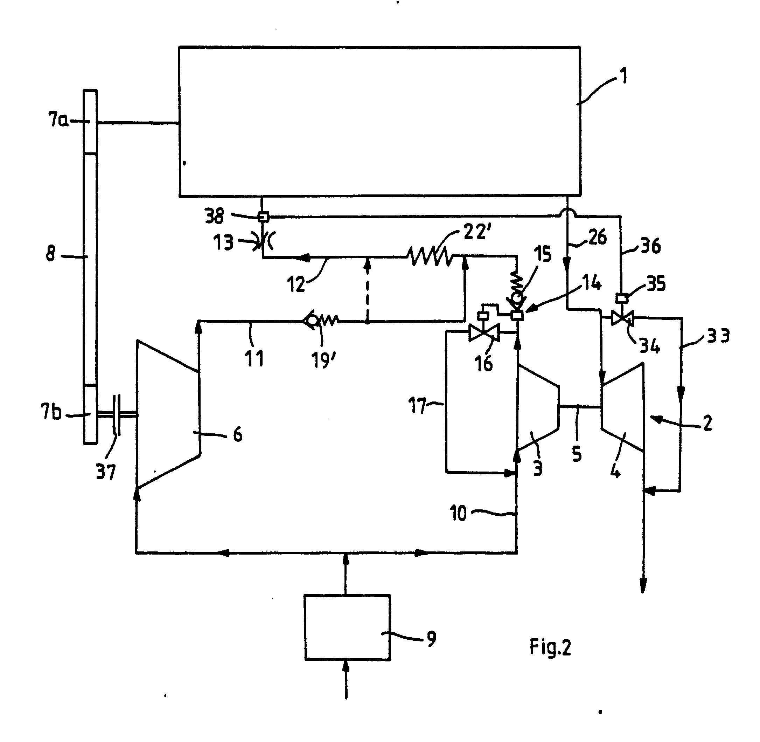

Die Ausführung nach der Figur 2 unterscheidet sich von derjenigen der Figur 1 im wesentlichen nur dadurch, daß eine die Ladeluft zum Eingang des Laders rückführende Rückführungsleitung 17 nur in der den Turbolader 3 beaufschlagenden Ansaugzweigleitung 10 vorgesehen ist. Eine Rückführung von Ladeluft auf den Eingang des mechanischen Laders erübrigt sich dagegen hier, da der mechanische Lader 6 bei Nichtbedarf mittels einer Kupplung 37 abschaltbar ist. Bei dieser Ausführung kann die den mechanischen Lader aufweisende Ansaugzweigleitung 11 in Strömungsrichtung vor oder hinter einem Ladeluftkühler 22' in die gemeinsame Ansaugleitung 12 einmünden. Das Überschreiten vorgegebener maximaler Ladedrücke des Turboladers 3 wird hier durch eine bekannte Wastegate-Steuerung vermieden, bei der eine die Abgasturbine 4 umgehende Bypaßleitung 33 zumindest einen Teil der aus der Brennkraftmaschine austretenden Abgase an der Abgasturbine vorbeileiten kann. In dieser Bypaßleitung 33 ist dazu ein von einem Stellmotor 35 betätigbares Ventil 34 angeordnet, wobei der Stellmotor 35 über eine Signalleitung 36 von einem in der gemeinsamen Ansaugleitung 12 angeordneten Signalgeber 38, beispielsweise einem Druckgeber, ansteuerbar ist.

Aus beiden Ausführungen geht als wesentlicher Gedanke hervor, eine selbsttätige Regelung der Übernahme der Ladedruckversorgung von dem einen auf den anderen Lader mittels zweier in den Ansaugzweigleitungen 10, 11 vorgesehener Rückschlagventile 15, 19 vorzusehen. Dabei wird im niedrigeren Last und Drehzahlbereich zunächst allein der mechanische Lader 6, der beispielsweise durch einen sogenannten Verdrängerlader gebildet sein kann, zur Versorgung der Brennkraftmaschine 1 mit Ladeluft herangezogen. Während dieser Zeit läuft der Turbolader 3 weitgehend drucklos mit, da die von ihm erzeugte Ladeluft immer wieder zu seinem Eingang zurückgeführt wird. Die Leistungsentnahme des Turboladers 3 ist also sehr klein, so daß die von der Abgasturbine 4 erzeugte Leistung weitgehend zum Beschleunigen des Abgasturbolader-Aggregates 2 verwendet werden kann. Die Drehzahl des Aggregates kann somit schnell erhöht werden, so daß das Aggregat relativ bald den Punkt erreicht, an dem es zur Übernahme der Ladedruckversorgung für den Motor bereit ist. Während dieser Zeit, das heißt solange das Rückschlagventil 15 in der den Turbolader 3 enthaltenden Ansaugzweigleitung 10 geschlossen ist, ist das in der Rückführungsleitung 17 eingeschaltete Steuerventil 16 geöffnet. Wenn, wie dies in der Figur 1 gezeigt ist, in Strömungsrichtung hinter dem Turbolader 3 und vor der Abzweigung der Rückführungsleitung 17 noch der Ladeluftkühler 22 eingeschaltet ist, wird in diesem Betriebszustand, in dem die Ladeluft im geschlossenen Kreislauf umläuft, deren Temperatur auch nicht übermäßig erhöht. Vielmehr wird die sich im Turbolader 3 ergebende Temperaturerhöhung in dem Ladeluftkühler 22 wieder abgebaut.

Wenn der Ladedruck des Turboladers 3 nun den von dem mechanischen Lader 6 erzeugten Druck erreicht bzw. überschreitet, öffnet das Rückschlagventil 15, womit gleichzeitig das in der Rückführungsleitung 17 angeordnete Steuerventil 16 geschlossen wird, so daß der Turbolader 3 die von ihm erzeugte und in dem Ladeluftkühler 22 rückgekühlte Ladeluft in die gemeinsame Ansaugleitung 12 fördert. Etwa in diesem Moment der Übernahme der Ladeluftversorgung der Brennkraftmaschine durch den Turbolader 3 wird das in der zweiten Ansaugzweigleitung 11 mit dem mechanischen Lader 6 angeordnete Rückschlagventil 19 geschlossen, so daß dann der mechanische Lader an der Ladeluftversorgung der Brennkraftmaschine 1 nicht mehr teilhat. Mit dem Schließen des Rückschlagventils 19 wird gleichzeitig das in der Rückführungsleitung 21 angeordnete Steuerventil 20 geöffnet, so daß auch hier eine Rückführung der von dem mechanischen Lader 6 erzeugten Ladeluft, die wiederum in dem nachgeschalteten Ladeluftkühler 23 rückgekühlt ist, auf die Saugseite des mechanischen Laders 6 erreicht wird. Nunmehr läuft der mechanische Lader nahezu drucklos um, so daß die zu dessen Antrieb erforderliche und der Brennkraftmaschine 1 entzogene Antriebsleistung wesentlich reduziert wird.

Bei Reduzierung der Leistung und/oder Drehzahl der Brennkraftmaschine kann die Übernahme der Ladeluftversorgung für die Brennkraftmaschine in umgekehrter Weise erfolgen, indem dann, wenn der Ladedruck des Turboladers 3 nicht mehr ausreicht, automatisch und selbsttätig der mechanische Lader 6 die erforderliche Druckluft liefert. Dazu schalten die Rückschlagventile 15 und 19 sowie die Steuerventile 16 und 20 in entsprechend umgekehrtem Sinne.

Wird insbesondere bei hohen Leistungen und Drehzahlen der Brennkraftmaschine der maximal zulässige Ladedruck in der gemeinsamen Ansaugleitung 12 von dem Turbolader 3 überschritten, dann öffnet das Überdruckventil 24 die Überschußrückführungsleitung 25 und lenkt die überschüssige Ladeluft auf die Saugseite des mechanischen Laders 6. Diese Überschußluft bewirkt hier eine weitere Reduzierung der Antriebsleistung des mechanischen Laders 6 und gegebenenfalls sogar eine Rückspeisung von Energie aus dem mechanischen Lader in die Brennkraftmaschine.

Bei der Ausführung nach der Figur 2 ergibt sich der Betrieb in analoger Weise, lediglich mit dem Unterschied, daß bei Übernahme der Ladedruckversorgung der Brennkraftmaschine 1 durch den Turbolader 3 der mechanische Lader 6 nicht drucklos weiterläuft, sondern mit Hilfe der schaltbaren Kupplung 37 unmittelbar abgeschaltet wird. Damit wird die gesamte, für den Antrieb des mechanischen Laders erforderliche Energie eingespart. Bis zu diesem Zeitpunkt, das heißt bis zur Ladedruckversorgungsübernahme durch den Turbolader 3 läuft dieser jedoch drucklos um, indem die von diesem erzeugte Ladeluft über die Rückführungsleitung 17 immer wieder auf seinen Eingang zurückgeführt wird. Bei Überschreitung des maximal zulässigen Ladedruckes erfolgt hier eine Reduzierung des Ladedrucks durch die an sich bekannte Wastegate-Steuerung, indem zumindest ein Teil der der Abgasturbine 4 zugeführten Abgasenergie nach Aufsteuerung des Ventils 34 über eine Bypaßleitung 33 an der Turbine vorbeigeführt wird.

**Ansprüche**

1. Antriebssystem für Fahrzeuge, insbesondere Personenkraftfahrzeuge, mit einer ein Kraftstoff-Luft-Gemisch verbrennenden Brennkraftmaschine sowie mit einem Abgasturbolader, und einem zusätzlichen, mechanisch, insbesondere von der Brennkraftmaschine angetriebenen Lader, wobei der Turbolader und der mechanisch angetriebene Lader parallel zueinander in zu der Brennkraftmaschine führenden Ansaug-Zweigleitungen angeordnet sind, die vor der Einmündung in die Brennkraftmaschine zu einer gemeinsamen Ansaugleitung verbunden sind, dadurch gekennzeichnet, daß in den Ansaug-Zweigleitungen (10, 11) in Strömungsrichtung vor der Einmündung in die gemeinsame Ansaugleitung (12) jeweils ein in Abhängigkeit von der Druckdifferenz zwischen der jeweiligen Ansaugzweigleitung (10, 11) und der gemeinsamen Ansaugleitung (12) steuerbares Ventil (15, 19) vorgesehen ist.

2. Antriebssystem nach Anspruch 1, dadurch gekennzeichnet, daß in der den Turbolader (3) beaufschlagenden ersten Ansaugzweigleitung (10) in Strömungsrichtung hinter dem Turbolader (3) und vor dem Ventil (15) eine mit dem Eingang des Turboladers (3) verbundene Rückführungsleitung (17) angeschlossen ist.

3. Antriebssystem nach Anspruch 1 oder 2, dadurch gekennzeichnet, daß in der den mechanischen Lader (6) beaufschlagenden zweiten Ansaugzweigleitung (11) in Strömungsrichtung hinter dem Lader (6) und vor dem Ventil (19) eine mit dem Eingang des mechanischen Laders (6) verbundene Rückführungsleitung (21) angeschlossen ist.

4. Antriebssystem nach einem der Ansprüche 1 bis 3, dadurch gekennzeichnet, daß die in den Ansaugzweigleitungen (10, 11) angeordneten Ventile (15, 19) als Rückschlagventile ausgebildet sind, die durch den Druck der gemeinsamen Ansaugleitung (12) in Schließrichtung betätigbar sind.

5. Antriebssystem nach Anspruch 2 oder 3, dadurch gekennzeichnet, daß in den Rückführungsleitungen (17, 21) jeweils ein Steuerventil (16, 20) angeordnet ist, das entgegengesetzt zu dem in der zugehörigen Ansaugzweigleitung (10, 11) angeordneten Ventil (15, 19) betätigbar ist.

6. Antriebssystem nach Anspruch 2 oder 3, dadurch gekennzeichnet, daß in der Ansaugzweigleitung (10, 11) zwischen dem Lader (3, 6) und der Abzweigung der Rückführungsleitung (17, 21) ein Ladeluftkühler (22, 23) eingeschaltet ist.

7. Antriebssystem nach einem der Ansprüche 1 bis 6, dadurch gekennzeichnet, daß eine von einem Überdruckventil (24) steuerbare Überschuß-Rückführungsleitung (25) vorgesehen ist, die die gemeinsame Ansaugleitung (12) mit dem Eingang des mechanischen Laders (6) verbindet.

8. Antriebssystem nach Anspruch 1 oder 2, dadurch gekennzeichnet, daß der mechanische Lader (6) mittels einer Kupplung (37) abschaltbar ist.

Fig.1

Fig.2

Volkswagen  AG Wolfsburg

Europäisches Patentamt

**EUROPÄISCHER RECHERCHENBERICHT**

Nummer der Anmeldung

EP 89 11 9500

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-C- 595 658 (A. BUECHI)<br>* Patentanspruch; Seite 2, Zeilen 27-92; Seite 2, Zeilen 99-105; Seite 3, Zeilen 2-24; Figur *<br>--- | 1,4,6 | F 02 B 37/04<br>F 02 B 37/14 |
| A | US-A-4 669 269 (H. DINGER et al.)<br>* Spalte 2, Zeile 46 - Spalte 3, Zeile 32; Spalte 4, Zeilen 3-49; Figur 1 *<br>--- | 1,4 | |
| A | GB-A-2 186 023 (FLEMING)<br>* Seite 1, Zeilen 60-116; Ansprüche 5,7,12,13; Figur 1 *<br>--- | 1,4,6,7 | |
| A | DE-C-3 443 324 (M.A.N.)<br>* Spalte 2, Zeilen 51-62; Spalte 3, Zeilen 10-12 *<br>----- | 1,8 | |

**RECHERCHIERTE SACHGEBIETE (Int. Cl.5)**

F 02 B

Der vorliegende Recherchenbericht wurde für alle Patentansprüche erstellt

| Recherchenort | Abschlußdatum der Recherche | Prüfer |
|---|---|---|
| BERLIN | 30-01-1990 | NOVELLI B. |